# FASCICULE DE BREVET EUROPEEN

(11) **EP 4 013 594 B1**
(45) Date de publication et mention de la délivrance du brevet: **01.11.2023**
(21) Numéro de dépôt: 20744067.8
(22) Date de dépôt: 29.07.2020
(51) Int. Cl.: B29C 45/26, B29C 45/36, B60J 1/16, B29C 45/33, B29D 23/00

(54) **RAIL DE GUIDAGE, DISPOSITIF ET PROCÉDÉ DE MOULAGE PAR INJECTION DE CE RAIL**
FÜHRUNGSSCHIENE, VORRICHTUNG UND VERFAHREN ZUM SPRITZGIESSEN DIESER SCHIENE
GUIDE RAIL, DEVICE AND METHOD FOR INJECTION-MOULDING THIS RAIL

(30) Priorité: 14.08.2019 FR 1909216
(43) Date de publication de la demande: 22.06.2022
(73) Titulaire: Cooper-Standard France, 35503 VITRE CEDEX (FR)
(72) Inventeur: GARINO, Thierry, 35500 Taillis (FR)
(74) Mandataire: Regimbeau
(86) Numéro de dépôt international: PCT/EP2020/071343
(87) Numéro de publication internationale: WO 2021/028220

(56) Documents cités:
- WO-A1-2015/063576
- DE-A1- 2 331 785

## Description

### DOMAINE DE L'INVENTION

L'invention se situe dans le domaine des équipements de véhicules automobiles.

La présente invention concerne un rail de guidage d'un dispositif de guidage d'une vitre coulissante dans une porte d'un véhicule automobile, un dispositif de fabrication par injection de ce rail et le procédé de fabrication de ce rail utilisant ce dispositif de fabrication.

### ETAT DE LA TECHNIQUE

Une porte de véhicule automobile comprend un caisson qui se prolonge à sa partie supérieure par un cadre. Ce cadre comprend deux montants, à savoir un montant avant et un montant arrière, reliés entre eux par une traverse. Ce cadre délimite avec le caisson, une ouverture. Une vitre est montée coulissante dans la portière de façon à obturer ou non cette ouverture. Au moins un dispositif de guidage est disposé soit dans le montant avant, soit dans le montant arrière pour guider cette vitre pendant son mouvement.

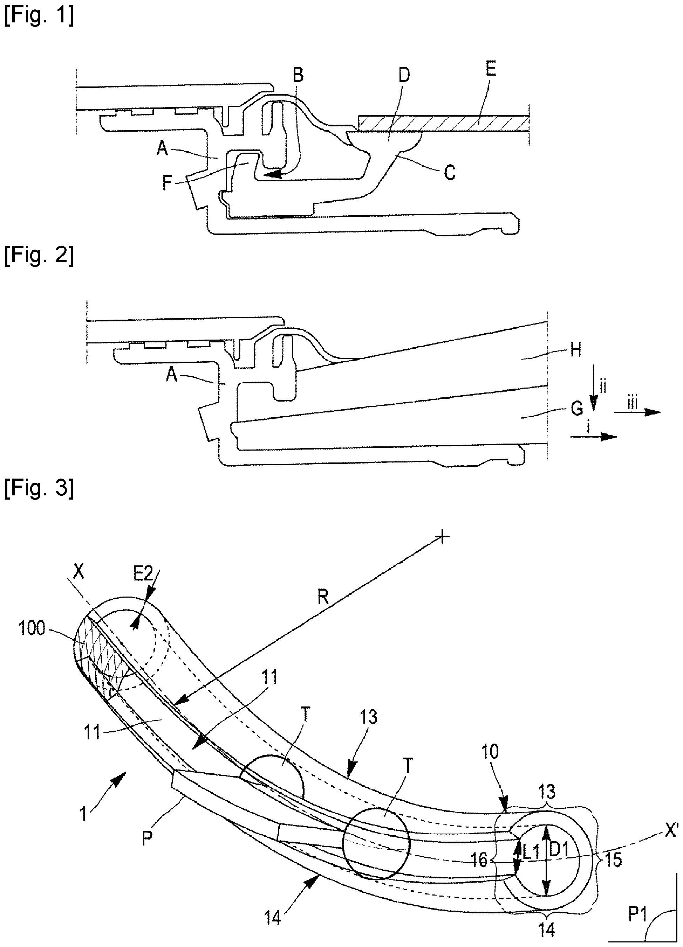

Chaque dispositif de guidage comprend un rail de guidage et au moins un patin de guidage coulissant. La figure 1 jointe représente, vu en section transversale, un exemple d'un tel dispositif de guidage connue de l'état de la technique.

On peut voir que le rail de guidage A se présente sous la forme d'un profilé creux continu muni d'une fente longitudinale B. Le patin de guidage C présente une extrémité D fixée sur la face intérieure de la vitre E et une autre extrémité F reçue et guidée dans la goulotte dudit rail de guidage.

Ce rail de guidage peut être obtenu par extrusion. Toutefois, si les procédés d'extrusion connus permettent d'obtenir des rails de guidage à section transversale en C, ces derniers sont obligatoirement rectilignes ou très légèrement cintrés. Or l'invention a pour but de produire tout type de rails, y compris un rail plus fortement cintré.

Le rail de guidage peut également être obtenu par moulage par injection. Toutefois, dans ce cas, comme la goulotte du rail de guidage ne présente pas d'angles de dépouille, ce rail ne peut pas être démoulé directement. Le moule doit donc être adapté de façon à présenter deux tiroirs G et H, comme représenté sur la figure 2 jointe. Lors du démoulage, le tiroir inférieur G est tout d'abord retiré (flèche i), puis le tiroir supérieur H est abaissé (flèche ii) puis retiré (flèche iii).

Toutefois, si l'on souhaite réaliser un rail de guidage qui simultanément soit cintré et présente une section transversale en C, il n'est alors plus possible de procéder au démoulage comme expliqué ci-dessus.

On connaît d'après l'état de l'art, la technique d'injection avec un projectile (connue sous l'acronyme anglais de "PIT" pour "*Projectile Injection Technique*"), la technique d'injection avec de l'eau, (connue sous l'acronyme anglais de "WIT" pour "*Water Injection Technique*") et la technique d'injection avec du gaz, (connue sous l'acronyme anglais de "GIT" pour "*Gas Injection Technique*")*,* qui consistent respectivement à envoyer un projectile de calibration, de l'eau ou du gaz, dans la matière plastique fondue injectée, pour former des corps creux. Toutefois, ces procédés ne permettent pas de maîtriser précisément la forme de la partie creuse intérieure de ce corps, ni son état de surface. On conséquence, ces procédés ne sont pas adaptés à la réalisation d'un rail de guidage dont la fonction est justement de guider les plus précisément possible un patin coulissant.

Enfin, quel que soit le procédé d'obtention précité utilisé, le rail obtenu doit ensuite être assemblé avec des pièces additionnelles, telles que des profilés de support ou des profilés structurels, qui ne peuvent pas être obtenues de façon monobloc avec ledit rail.

On connaît d'après le document DE 2331 785 un rail de guidage rectiligne, à l'intérieur duquel est insérée une pièce en matière plastique fabriquée par injection et facilitant le coulissement du siège.

On connaît enfin d'après le document WO 2015/063576 un dispositif de moulage d'une pompe portable miniature, qui permet de fabriquer le corps de la pompe. Toutefois, ce corps ne présente pas de rainure longitudinale.

### EXPOSE DE L'INVENTION

L'invention a donc pour but de remédier aux inconvénients précités de l'état de la technique et de proposer un rail de guidage rectiligne ou cintré, muni d'une fente sur au moins une partie de sa longueur et obtenu par injection, un dispositif et un procédé de fabrication par injection du rail de guidage précité.

L'invention a également pour but d'obtenir, par un procédé d'injection, un rail de guidage tel que précité, qui ne présente pas d'angles de dépouille et dont la section transversale est d'une forme telle qu'elle ne permet pas le démoulage simple par extraction du moule au travers de la fente.

A cet effet, l'invention concerne un rail de guidage, notamment pour guider un patin de guidage fixé sur la vitre coulissante d'une porte de véhicule automobile, ce rail de guidage étant réalisé en une matière plastique injectée, et comprenant au moins une partie ayant la forme d'un profilé tubulaire, qui présente sur toute sa longueur un évidement et qui est muni sur au moins une partie de sa longueur, d'une fente longitudinale.

Conformément à l'invention, ce profilé tubulaire est incurvé en forme d'arc de cercle, cet arc de cercle étant inscrit dans un plan, de sorte que la surface extérieure dudit profilé tubulaire présente une zone longitudinale concave, une zone longitudinale opposée convexe et deux zones longitudinales latérales opposées, chaque zone longitudinale latérale s'étendant de la zone concave à la zone convexe, et ladite fente longitudinale s'étend le long de l'une des deux zones longitudinales latérales ou le long de la zone longitudinale concave.

Un tel rail de guidage présente les caractéristiques souhaitées précitées.

Selon d'autres caractéristiques avantageuses et non limitatives de l'invention, prises seules ou en combinaison :
- l'évidement a la forme d'une portion de tore avec une section transversale circulaire.
- le profilé tubulaire incurvé présente un rayon de courbure compris entre 300 mm et l'infini.
- le profilé tubulaire comprend au moins une aile longitudinale qui s'étend depuis la surface extérieure de ce profilé tubulaire et qui est monobloc avec ledit profilé tubulaire.
- le rail de guidage est réalisé en au moins une matière composite ou non.
- ladite matière est choisie parmi le polypropylène (PP), le polyoxyméthylène (POM), l'acrylonitrile butadiène styrène (ABS), l'acrylonitrile butadiène styrène/polycarbonate (ABS/PC), le poly méthyl méthacrylate (PMMA), l'acrylonitrile styrène acrylate (ASA), ou le styrène acrylonitrile.
- le rail de guidage est un rail de guidage d'un patin de guidage fixé sur la vitre coulissante d'une porte de véhicule automobile.

L'invention concerne également un dispositif de moulage par injection du rail précité.

Conformément à l'invention, ce dispositif comprend :
- un moule comprenant une partie mâle et une partie femelle délimitant ensemble une cavité de moulage dont la forme correspond à celle du contour dudit rail de guidage à mouler, ladite partie femelle comprenant au moins deux pièces, ladite cavité de moulage comprenant une portion, dite "alvéole de moulage", dont la forme correspond à celle de ladite au moins une partie du rail de guidage ayant la forme dudit profilé tubulaire, la partie mâle du moule comprenant au moins un noyau de formation de l'évidement du rail et une pièce intermédiaire de formation de ladite fente longitudinale du rail,
- un dispositif d'injection sous pression à l'intérieur de ladite cavité de moulage, de la matière plastique destinée à fabriquer ledit rail de guidage, et
- un dispositif d'extraction du noyau de ladite partie mâle hors de l'alvéole de moulage du moule, ce dispositif d'extraction étant configuré pour extraire le noyau depuis l'une des deux extrémités de l'alvéole de moulage.

Selon d'autres caractéristiques avantageuses et non limitatives de l'invention, prises seules ou en combinaison :
- le noyau est incurvé en forme d'arc de cercle, cet arc de cercle étant inscrit dans un plan et le dispositif d'extraction est configuré pour déplacer ledit noyau depuis l'une des deux extrémités de l'alvéole de moulage selon une trajectoire en arc de cercle de même rayon que le rayon de l'arc de cercle de ce noyau.
- la surface extérieure du noyau présente une zone longitudinale concave, une zone longitudinale opposée convexe et deux zones longitudinales latérales opposées, chaque zone longitudinale latérale s'étendant de la zone concave du noyau à la zone convexe du noyau et soit la zone la zone concave du noyau, soit l'une des deux zones longitudinales latérales se prolonge vers l'extérieur et sur au moins une partie de la longueur dudit noyau par ladite pièce intermédiaire.
- l'évidement du rail de guidage a la forme d'une portion de tore avec une section transversale circulaire, caractérisé en ce que ledit noyau a la forme d'un tore de section transversale circulaire et en ce que le diamètre de cette section transversale correspond au diamètre intérieur de l'évidement du profilé du rail de guidage à mouler.
- la partie mâle du moule comprend en outre une pièce de coopération avec ledit dispositif d'extraction, ledit noyau se prolongeant vers l'extérieur et sur au moins une partie de sa longueur par ladite pièce intermédiaire de formation de la fente du rail, l'épaisseur de cette pièce intermédiaire correspond à l'épaisseur du rail de guidage à obtenir.
- ladite pièce de coopération comprend une crémaillère, en ce que ledit dispositif d'extraction comprend un pignon entraîné en rotation par un dispositif de déplacement, ce pignon engrenant avec les dents de la crémaillère, de façon à déplacer cette crémaillère, et conjointement le noyau de la partie mâle du moule, de façon que le noyau sorte de l'alvéole de moulage.
- la crémaillère est en forme d'arc de cercle, en ce que le pignon est disposé de façon que son axe de rotation soit parallèle à l'axe central du cercle du noyau en forme d'arc de cercle de la partie mâle du moule et le pignon engrène avec les dents de la crémaillère de façon à déplacer cette crémaillère et conjointement le noyau selon une trajectoire en forme d'arc de cercle de même rayon que le rayon qui joint l'axe central du cercle du noyau en forme d'arc de cercle au centre de la section transversale dudit noyau, de façon à faire sortir le noyau hors de l'alvéole de moulage.

Enfin, l'invention concerne également un procédé de moulage du rail de guidage précité.

Conformément à l'invention, ce procédé comprend les étapes consistant à :
- injecter de la matière plastique sous pression à l'intérieur de la cavité de moulage du moule du dispositif de moulage précité,
- faire durcir cette matière plastique,
- actionner le dispositif d'extraction de façon à faire coulisser la partie mâle du moule hors de la partie femelle dudit moule pour l'en extraire,
- écarter les différentes pièces de la partie femelle du moule pour démouler le rail de guidage obtenu.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue en coupe d'un rail de guidage conforme à l'état de la technique, dans lequel est inséré un patin de guidage fixé à la vitre à faire coulisser.
La figure 2 est une vue en coupe transversale du rail de guidage de la figure 1 et de certaines parties du moule ayant servi à son injection.
La figure 3 est une vue en perspective un premier mode de réalisation d'un rail de guidage conforme à l'invention et une variante (en hachuré) ainsi qu'un patin de guidage disposé à l'intérieur de celui-ci.
La figure 4 est une vue de face du rail de guidage de la figure 3 après pivotement de 180°.
La figure 5 est une vue en perspective du rail de guidage de la figure 3 après pivotement de 180°.
La figure 6 est une vue de dessus du rail de guidage de la figure 5, à une échelle réduite.
La figure 7 est une vue en coupe transversale d'un deuxième mode de réalisation du rail de guidage conforme à l'invention.
La figure 8 est une vue en coupe transversale d'un troisième mode de réalisation du rail de guidage conforme à l'invention.
La figure 9 est une vue en perspective d'un quatrième mode de réalisation du rail de guidage conforme à l'invention, équipé de languettes de retenue.
La figure 10 est une vue schématique en perspective du principe de fonctionnement du dispositif d'extraction du dispositif de moulage par injection conforme à l'invention.
La figure 11 est un schéma d'un exemple de réalisation possible du noyau de la partie mâle du moule appartenant au dispositif de moulage conforme à l'invention.
La figure 12 est une vue en coupe schématique d'un exemple de réalisation possible de la partie mâle et d'une portion de la partie femelle du moule appartenant au dispositif de moulage conforme à l'invention.
La figure 13 est une vue en coupe transversale d'un exemple de réalisation du moule du dispositif de moulage conforme à l'invention.
La figure 14 est une vue schématique d'un exemple de réalisation du dispositif d'injection sous pression du dispositif de moulage conforme à l'invention.

Sur l'ensemble des figures, les éléments identiques portent des références identiques.

### DESCRIPTION DETAILLEE DE L'INVENTION

Le rail de guidage 1 conforme à l'invention comprend au moins une partie ayant la forme d'un profilé tubulaire 10. Un exemple de réalisation possible de ce profilé tubulaire est tel que représenté sur la figure 3.

Sur cet exemple, le profilé 10 présente sur toute sa longueur, un évidement 11 de section transversale circulaire. En outre, le profilé 10 est muni d'une fente longitudinale 12 qui s'étend sur toute sa longueur. La fente 12 débouche à la fois sur l'extérieur du rail et à l'intérieur de l'évidement 11. Le profilé tubulaire 10 présente donc une section transversale en forme de C.

Le profilé 10 peut toutefois présenter une section d'une autre forme, par exemple une forme d'ellipse, une forme carrée ou une forme rectangulaire.

Il peut également être obturé à l'une de ses deux extrémités.

Enfin, la fente 12 peut ne pas s'étendre sur la totalité de la longueur du profilé 10 et s'arrêter avant l'une des deux extrémités de celui-ci, de préférence à faible distance de cette extrémité, (voir par exemple la partie hachurée 100 du rail 10 dans laquelle il n'y a pas de fente 12).

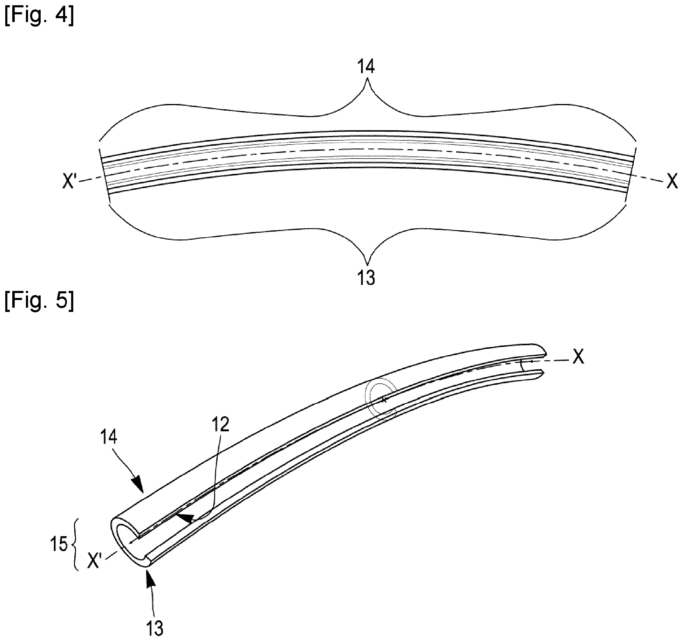

En outre, quelle que soit sa section, le profilé 10 est de préférence incurvé en forme d'arc de cercle de façon à présenter sur toute sa longueur, une zone longitudinale concave 13, une zone longitudinale opposée convexe 14, et deux zones longitudinales latérales opposées 15 et 16, (voir également les figures 4 et 5). Chacune des deux zones longitudinales latérales 15 et 16 s'étend de la zone concave 13 à la zone convexe 14.

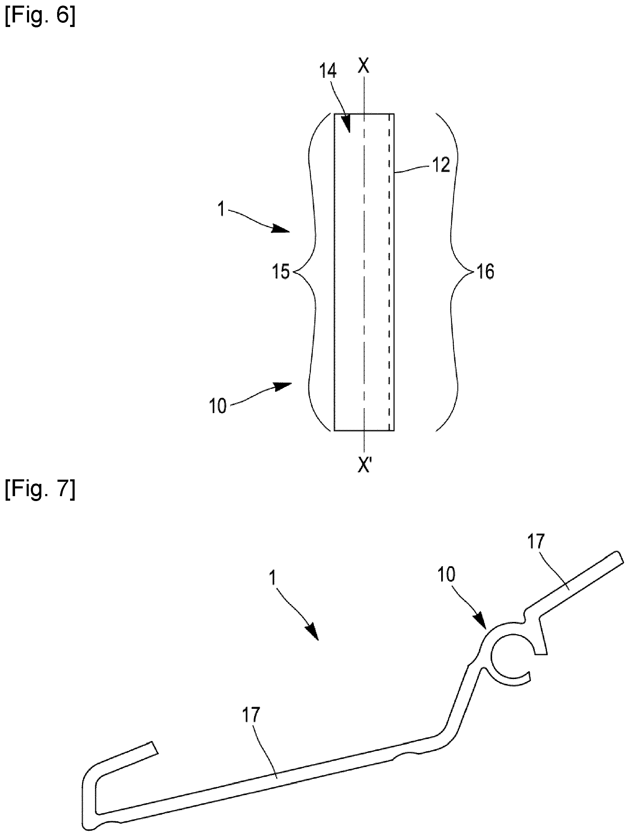

Toutefois, on notera qu'en vue de dessus et comme représenté sur la figure 6, le profilé tubulaire incurvé 10 est rectiligne, c'est-à-dire que l'arc de cercle de son incurvation est situé dans un plan.

Le profilé 10 peut également ne pas être incurvé du tout.

Lorsque le profilé 10 est incurvé, l'évidement 11 de la figure 3 a la forme d'une portion de tore. Lorsque le rail 10 présente une section transversale autre que circulaire, l'évidement 11 est alors de forme annulaire mais avec ladite section transversale correspondante.

Lorsque le profilé tubulaire 10 est incurvé, la fente longitudinale 12 s'étend soit le long de la zone longitudinale concave 13, soit le long de l'une des deux zones longitudinales latérales 15 ou 16, (ici la zone 16 sur les figures), en étant alors disposée de préférence à mi-distance ou sensiblement à mi-distance entre la zone longitudinale convexe 14 et la zone longitudinale concave 13.

Le profilé tubulaire 10 présente un rayon de courbure R, compris de préférence entre 300 mm et l'infini, de préférence encore entre 1000 mm et 2000 mm, afin de faciliter le démoulage du rail 1.

Le profilé tubulaire 10 présente un axe longitudinal central X-X' qui est donc soit rectiligne, soit en forme d'arc de cercle suivant la forme du profilé, cet arc de cercle étant inscrit dans un plan P1.

Le rail de guidage 1 permet le guidage d'un patin de guidage P, tel que par exemple celui représenté sur la figure 3 mais qui ne fait pas partie de l'invention. Un tel patin P est muni de deux têtes sphériques T. Ces deux têtes T pénètrent et coulissent dans l'évidement 11 et le corps du patin de guidage P passe au travers de la fente longitudinale 12.

Comme on peut le voir sur la figure 3, du fait de la forme en C de la section transversale du profilé 10, la largeur L1 de la fente 12 est inférieure au diamètre intérieur D1 de l'évidement 11. En d'autres termes, le profilé 10 ne présente pas d'angles de dépouille et ne peut pas être démoulé en sortant la partie mâle du moule qui servirait à sa fabrication au travers de la fente 12. Ceci s'applique également aux profilés 10 de l'invention dont la section transversale est d'une forme autre que circulaire.

Sous sa forme la plus simple, le rail de guidage 1 conforme à l'invention comprend uniquement un profilé tubulaire 10. Toutefois, il peut également comprendre au moins une aile longitudinale 17 qui s'étend depuis la surface extérieure du profilé 10 et qui est monobloc avec ce profilé 10. Le terme "monobloc" signifie qu'elle est venue de matière avec le profilé 10.

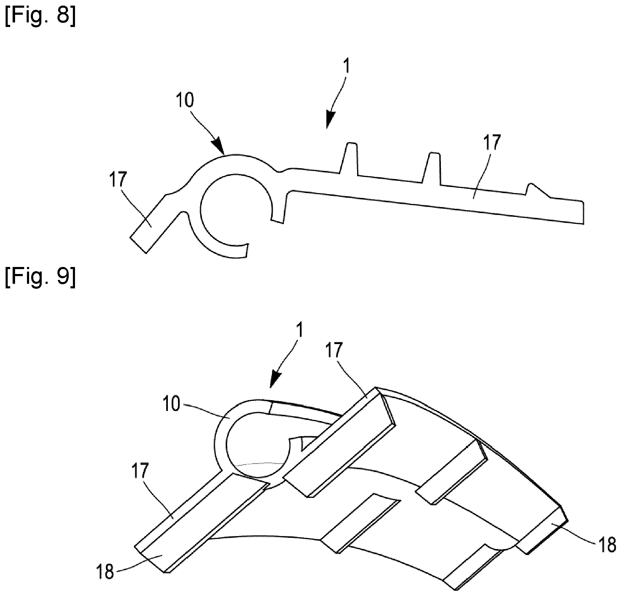

Les figures 7 et 8 illustrent deux exemples de réalisation possibles du rail de guidage 1 qui incluent ces ailes 17, ces dernières permettant la fixation du rail de guidage 1 sur les montants de la porte du véhicule automobile. Les formes de ces ailes 17 peuvent être très variées et sont adaptées en fonction du véhicule sur lequel le rail de guidage 1 doit être monté.

La figure 9 illustre un autre exemple d'un rail de guidage 1, qui comprend outre des ailes 17, des pattes de retenue 18, monoblocs avec les ailes 17 et dont le rôle sera détaillé ultérieurement.

Le rail de guidage 1 conforme à l'invention peut être réalisé dans son intégralité dans une unique matière injectée (celle-ci pouvant être composite). Il peut également être réalisé en plusieurs matières injectées, et dans ce cas, ce sont des parties différentes du rail 1 qui sont réalisées dans des matières différentes.

A titre d'exemple purement illustratif, s'il y a une seule matière celle-ci peut être choisie parmi le polypropylène (PP), le polyoxyméthylène (POM), l'acrylonitrile butadiène styrène (ABS), l'acrylonitrile butadiène styrène/polycarbonate (ABS/PC).

Lorsque le rail comprend deux matières différentes, on pourra combiner les matériaux précités, voire y ajouter un matériau thermoplastique vulcanisé (TPV) compatible chimiquement ou mécaniquement avec l'un des matériaux précités.

Enfin, si le rail comprend par exemple trois matières, par exemple pour réaliser trois parties différentes, on pourra par exemple outre l'ensemble des matériaux précités ajouter du poly méthyl méthacrylate (PMMA), de l'acrylonitrile styrène acrylate (ASA), ou du styrène acrylonitrile sur un support en acrylonitrile butadiène styrène (ABS)ou en acrylonitrile butadiène styrène/polycarbonate (ABS/PC).

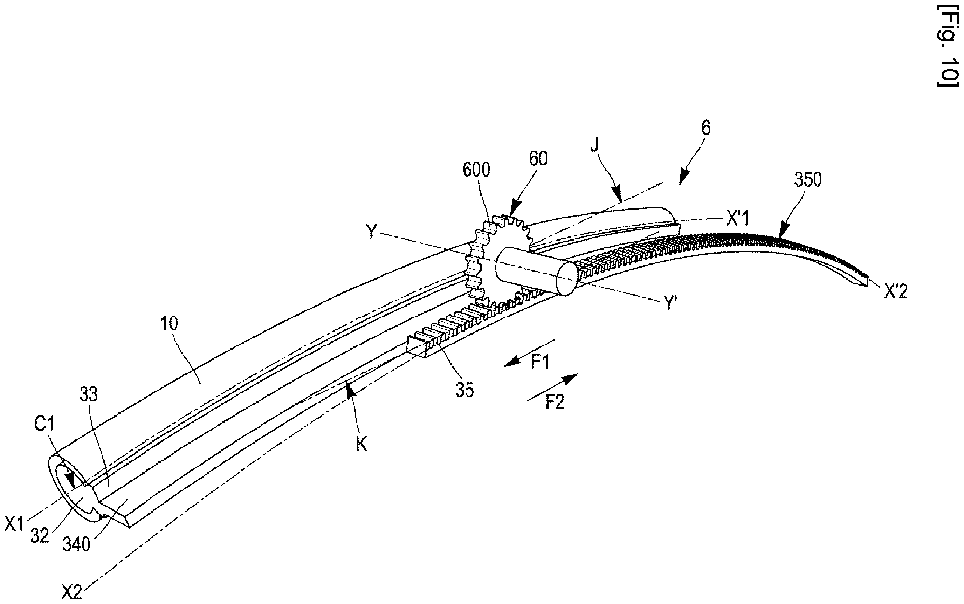

L'invention concerne également un dispositif de moulage par injection 2 qui permet de fabriquer le rail 1 précité et qui va maintenant être décrit plus en détail en liaison avec les figures 10 à 13.

D'une manière générale, le dispositif de moulage 2 conforme à l'invention comprend un moule 3, un dispositif 5 d'injection sous pression de la matière plastique à l'intérieur dudit moule et un dispositif 6 d'extraction de la partie mâle de ce moule hors de la partie femelle de ce dernier.

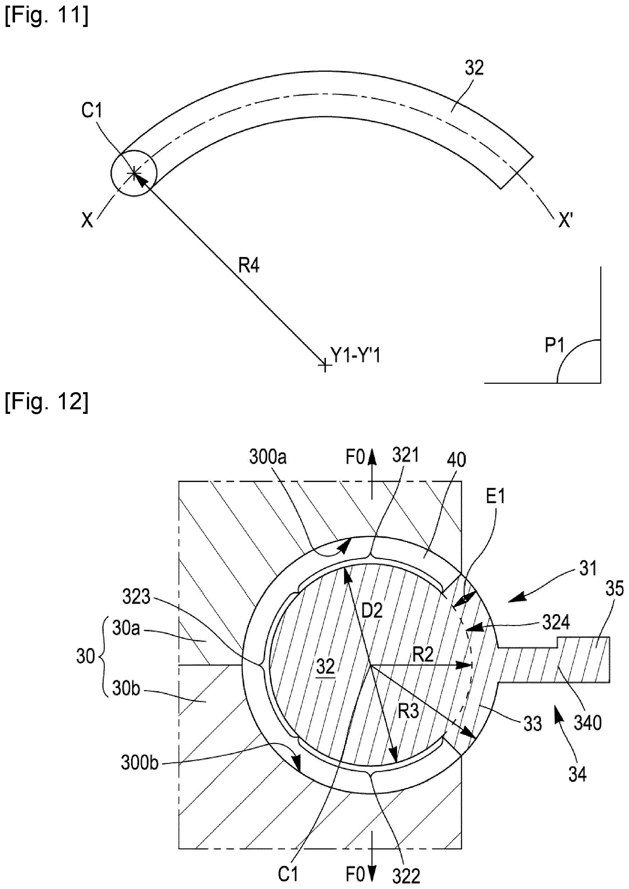

Le moule 3 va maintenant être décrit en liaison avec les figures 11 et 12. Il comprend une partie femelle 30 et une partie mâle 31, qui délimitent ensemble et entre elles, une cavité de moulage 4 dont la forme correspond à celle du contour du rail de guidage 1 à fabriquer.

La cavité de moulage 4 comprend une portion 40, dite " alvéole de moulage", dont la forme correspond à celle du profilé tubulaire incurvé 10 du rail de guidage.

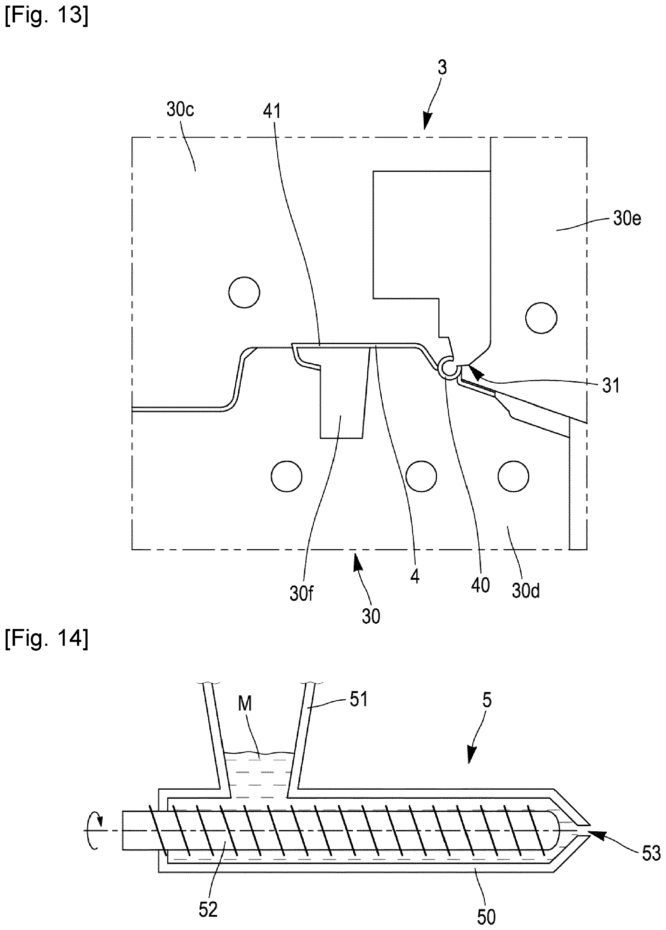

En d'autres termes, *a minima,* la cavité de moulage 4 peut ne comprendre que l'alvéole de moulage 40, comme représenté dans l'exemple de la figure 12. Inversement, comme représenté dans l'exemple de la figure 13, la cavité de moulage 4 peut comprendre l'alvéole de moulage 40 précitée ainsi que d'autres parties 41 servant à former les ailes 17 monobloc avec le profilé 10. La figure 13 représente par exemple le moule permettant d'obtenir le rail 1 illustré sur la figure 7.

La partie mâle 31 du moule sert à façonner l'évidement 11 du rail 1, ainsi que la fente longitudinale 12.

La partie femelle 30 du moule sert à fabriquer la surface extérieure du profilé tubulaire 10 et les ailes 17, ainsi que les pattes 18 lorsqu'elles existent.

Dans l'exemple de réalisation représenté sur la figure 12, la partie femelle 30 du moule 3 comprend deux pièces 30a et 30b, mobiles et capables d'être écartées l'une de l'autre (flèches F0), afin de permettre le démoulage du rail 1. Chaque pièce 30a, 30b du moule comprend ainsi une zone en creux 300a, 300b permettant de façonner la surface extérieure du profilé 10.

La zone 300a présente par exemple une section transversale en arc de cercle et une forme incurvée et concave sur toute sa longueur de façon à façonner la partie convexe 14 du profilé 10 du rail 1. Inversement, la zone 300b présente une section transversale en arc de cercle et une forme incurvée et convexe sur toute sa longueur, de façon à former la zone concave 13 du rail 1. On notera que lorsque le profilé 10 est rectiligne, les zones 300a et 300b du moule présentent une section transversale en arc de cercle mais sont rectilignes sur toute leur longueur.

Le moule 3 pourrait bien évidemment comprendre plus de deux pièces.

Ainsi, dans l'exemple de réalisation représenté sur la figure 13, la partie femelle 30 du moule comprend quatre pièces, référencées 30c, 30d, 30e et 30f. Les pièces 30c, 30d, 30e et 30f permettent ainsi de fabriquer non seulement le profilé tubulaire 10 mais également les ailes 17.

Dans cet exemple de réalisation, on voit par exemple que la pièce 30f est un tiroir qui est mobile en translation selon une direction perpendiculaire au plan de la section transversale du moule représentée sur la figure 13, de sorte que l'extrémité recourbée de l'aile 17 qui présente des angles de dépouille peut être démoulée.

On comprend aisément que le nombre de pièces constituant la partie femelle 30 du moule 3 peut être adapté en fonction du rail de guidage à produire.

La partie mâle du moule qui permet d'obtenir un rail muni d'un profilé 10 incurvé va maintenant être décrite.

De façon avantageuse, et comme on peut le voir sur la figure 12, la partie mâle 31 du moule comprend un noyau 32 de formation de l'évidement 11 du rail 1, une pièce intermédiaire 33 de formation de la fente longitudinale 12 et une pièce 34 de coopération avec le dispositif d'extraction 6. De préférence, le noyau 32, la pièce intermédiaire 33 et la pièce de coopération 34 sont monoblocs.

Le noyau 32 est incurvé en forme d'arc de cercle, cet arc de cercle étant inscrit dans un plan. Dans l'exemple de réalisation représenté sur les figures 10 à 13, le noyau 32 a la forme d'une portion de tore de section transversale circulaire. Le diamètre D2 de la section transversale du tore est égal à celui du diamètre intérieur D1 de l'évidement 11 du profilé 10.

En outre, comme on peut le voir sur le schéma de la figure 11, le noyau 32 en forme de portion d'anneau présente un axe central Y1 -Y'1 de l'anneau et un rayon R4 joignant cet axe Y1-Y'1 au centre C1 de la section transversale dudit noyau 32.

Le noyau 32 est incurvé de sorte qu'il présente sur sa surface extérieure une zone longitudinale convexe 321 (convexe sur sa longueur), une zone opposée longitudinale concave 322 (concave sur sa longueur) et deux zones longitudinales latérales 323, 324, chacune d'entre elles joignant la zone convexe 321 à la zone concave 322.

Le noyau 32 se prolonge vers l'extérieur soit depuis sa zone concave 322, soit depuis l'une de ses deux zones latérales (ici la zone 324) et sur au moins une partie de sa longueur, par ladite pièce intermédiaire 33.

La section transversale de ladite pièce intermédiaire 33 présente par exemple une forme d'arc de cercle dont le rayon intérieur R2 correspond à celui de la section transversale circulaire du noyau 32, et dont le rayon extérieur R3 correspond à celui du cercle délimitant l'alvéole de moulage 40. En d'autres termes, l'épaisseur E1 de cette portion intermédiaire 33 correspond à l'épaisseur E2 du rail de guidage à obtenir (voir figure 3).

En outre, et sur toute sa longueur, et comme cela apparaît mieux sur la figure 10, la pièce intermédiaire 33 est incurvée de façon à suivre la courbure du noyau 32.

La partie mâle du moule qui permet d'obtenir un rail muni d'un profilé 10 rectiligne va maintenant être décrite. Elle diffère de ce qui vient d'être décrit en ce que le noyau 32 est rectiligne et de section transversale circulaire ou non et en ce que la pièce intermédiaire 33, qui fait saillie le long du noyau 32, est également rectiligne.

Un mode de réalisation possible du dispositif d'injection sous pression 5 va maintenant être décrit en liaison avec la figure 14.

De façon classique, le dispositif 5 permet l'injection sous pression de matière plastique à l'intérieur de la cavité 4 de moulage.

Le dispositif d'injection 5 comprend un corps 50, alimenté en matière plastique M par une trémie 51. Une vis sans fin 52 est disposée à l'intérieur du corps 50. Elle est entraînée en rotation par un moteur (non représenté sur les figures), de façon à pousser la matière plastique sous pression à travers un orifice de sortie 53, lui-même raccordé à la cavité de moulage 4.

Le dispositif d'extraction 6 permet de déplacer le noyau 32 hors de l'alvéole de moulage 40, depuis l'une des deux extrémités de celle-ci.

Un exemple de réalisation du dispositif d'extraction 6 va maintenant être décrit en liaison avec la figure 10. Ce dispositif 6 est adapté au cas ou le noyau 32 est incurvé. Dans ce cas, le dispositif 6 permet de déplacer le noyau 32 selon une trajectoire en forme d'arc de cercle de même rayon que le rayon R4 précité de l'arc de cercle du noyau 32.

La pièce de coopération 34 comprend une languette 340, incurvée selon sa longueur, de sorte qu'elle présente une forme en arc de cercle, ce cercle étant coaxial à l'axe central Y1-Y'1 de l'anneau dont le noyau 32 constitue une portion. Cette languette 340 présente sur sa face supérieure une série de dents 35 qui forment ensemble une crémaillère 350.

Le dispositif d'extraction 6 comprend un pignon 60 entraîné en rotation par un dispositif de déplacement non représenté sur les figures. Ce dispositif de déplacement peut par exemple être un vérin rotatif ou un motoréducteur.

Le pignon 60 est disposé de façon que son axe de rotation Y-Y' soit parallèle à l'axe Y1-Y'1 de l'anneau formant le noyau 32 de la partie mâle. Les dents 600 de ce pignon 60 engrènent avec les dents 35 de la crémaillère 350.

La rotation du pignon 60 entraîne le déplacement de la crémaillère 350 et donc conjointement celui du noyau 32. Ce déplacement s'effectue selon une trajectoire en forme d'arc de cercle de même rayon que le rayon R4 du noyau 32, en provoquant ainsi l'extraction du noyau 32 hors de l'alvéole de moulage 40 du moule. La rotation en sens inverse du pignon permet inversement de ramener en position le noyau 32 à l'intérieur de l'alvéole de moulage 40. Comme on peut le voir sur la figure 10, la crémaillère 350 dépasse en longueur à l'une des extrémités du noyau 32 de façon à pouvoir extraire totalement le noyau 32 hors du rail 10.

De préférence, et comme on peut le voir sur la figure 10, le pignon 60 est disposé à la moitié ou sensiblement à la moitié de la longueur du noyau 32. Ceci permet d'avoir un mouvement circulaire d'extraction qui équilibre les efforts de démoulage.

La force d'extraction exercée par le pignon 60 s'exerce selon une direction rectiligne K tangente à la direction d'incurvation X2-X'2 de la crémaillère 350 et selon la direction de la flèche F1. Cette force d'extraction compense la force de démoulage qui s'exerce selon une direction rectiligne J tangente à la trajectoire d'extraction en forme d'arc de cercle X1-X1', X1-X1' étant inscrit dans le plan P1 et X1-X1' correspondant également à l'axe longitudinal central incurvé du noyau 32. Lorsque le noyau 32 est dans le profilé 10, on notera que les arcs de cercle X1-X'1 et X-X' sont confondus. Les directions J et K sont parallèles.

Lorsque le noyau 32 est rectiligne, le dispositif d'extraction 6 diffère en ce que la languette 34 ainsi que la crémaillère 350 sont rectilignes et parallèles au noyau 32. En outre, l'extraction s'effectue également de manière rectiligne.

Le procédé de moulage conforme à l'invention va maintenant être décrit. Il comprend une première étape qui consiste à injecter de la matière plastique sous pression à l'aide du dispositif 5 à l'intérieur de la cavité 4 du moule 3 du dispositif de moulage conforme à l'invention.

L'étape suivante consiste à faire durcir cette matière plastique, par exemple par chauffage.

Lorsque la matière plastique a durci et que le rail de guidage 1 est formé, le dispositif d'extraction 6 est actionné de sorte que le dispositif de déplacement entraîne en rotation le pignon 60. Ce pignon engrène avec la crémaillère 350 et provoque le déplacement du noyau 32 hors de la cavité 40 et également hors de l'évidement 11 du profilé 10 du rail de guidage 1 (voir la flèche F1 sur la figure 10).

Lorsqu'elles sont présentes, les pattes de retenue 18 perpendiculaires aux ailes 17 permettent de retenir le rail moulé 1 dans la partie femelle 30 du moule pendant le déplacement de la partie mâle 31.

De façon avantageuse, les différentes parties constitutives de la partie femelle 30 du moule sont ensuite écartées pour permettre le démoulage du rail de guidage 1.

Ensuite, en entraînant en rotation en sens inverse le pignon 60, le noyau 32 peut être ramené en position initiale à l'intérieur de la cavité 40 (flèche F2), en vue du moulage d'un autre rail de guidage 1.

## Revendications

1. Rail de guidage (1), notamment pour guider un patin de guidage fixé sur la vitre coulissante d'une porte de véhicule automobile, ce rail de guidage étant réalisé en une matière plastique injectée, et comprenant au moins une partie ayant la forme d'un profilé tubulaire (10), qui présente sur toute sa longueur un évidement (11) et qui est muni sur au moins une partie de sa longueur, d'une fente longitudinale (12), **caractérisé en ce que** ce profilé tubulaire (10) est incurvé en forme d'arc de cercle, cet arc de cercle étant inscrit dans un plan, de sorte que la surface extérieure dudit profilé tubulaire (10) présente une zone longitudinale concave (13), une zone longitudinale opposée convexe (14) et deux zones longitudinales latérales opposées (15, 16), chaque zone longitudinale latérale (15, 16) s'étendant de la zone concave (13) à la zone convexe (14), et **en ce que** ladite fente longitudinale (12) s'étend le long de l'une des deux zones longitudinales latérales (15, 16) ou le long de la zone longitudinale concave (13).

2. Rail de guidage selon la revendication 1, **caractérisé en ce que** l'évidement (11) a la forme d'une portion de tore avec une section transversale circulaire.

3. Rail de guidage selon la revendication 1 ou 2, **caractérisé en ce que** le profilé tubulaire (10) incurvé présente un rayon de courbure (R) compris entre 300 mm et l'infini.

4. Rail de guidage selon l'une des revendications précédentes, **caractérisé en ce que** le profilé tubulaire (10) comprend au moins une aile longitudinale (17) qui s'étend depuis la surface extérieure de ce profilé tubulaire et qui est monobloc avec ledit profilé tubulaire.

5. Rail de guidage selon l'une des revendications précédentes, **caractérisé en ce qu'**il est réalisé en au moins une matière composite ou non.

6. Rail de guidage selon la revendication 5, **caractérisé en ce que** ladite matière est choisie parmi le polypropylène (PP), le polyoxyméthylène (POM), l'acrylonitrile butadiène styrène (ABS), l'acrylonitrile butadiène styrène/polycarbonate (ABS/PC), le poly méthyl méthacrylate (PMMA), l'acrylonitrile styrène acrylate (ASA), ou le styrène acrylonitrile.

7. Rail de guidage selon l'une des revendications précédentes, **caractérisé en ce qu'**il s'agit d'un rail de guidage d'un patin de guidage fixé sur la vitre coulissante d'une porte de véhicule automobile.

8. Dispositif de moulage par injection du rail de guidage conforme à l'une des revendications 1 à 7, **caractérisé en ce qu'**il comprend :
un moule (3) comprenant une partie mâle (31) et une partie femelle (30, 30a, 30b, 30c, 30d, 30e, 30f) délimitant ensemble une cavité de moulage (4) dont la forme correspond à celle du contour dudit rail de guidage (1) à mouler, ladite partie femelle comprenant au moins deux pièces (30, 30a, 30b, 30c, 30d, 30e, 30f), ladite cavité de moulage (4) comprenant une portion (40), dite "alvéole de moulage", dont la forme correspond à celle de ladite au moins une partie du rail de guidage ayant la forme dudit profilé tubulaire (10), la partie mâle (31) du moule comprenant au moins un noyau (32) de formation de l'évidement (11) du rail et une pièce intermédiaire (33) de formation de ladite fente longitudinale (12) du rail (1),
un dispositif (5) d'injection sous pression à l'intérieur de ladite cavité de moulage (4), de la matière plastique destinée à fabriquer ledit rail de guidage (1), et
un dispositif d'extraction (6) du noyau (32) de ladite partie mâle hors de l'alvéole de moulage (40) du moule, ce dispositif d'extraction (6) étant configuré pour extraire le noyau (32) depuis l'une des deux extrémités de l'alvéole de moulage (40).

9. Dispositif de moulage selon la revendication 8, **caractérisé en ce que** le noyau (32) est incurvé en forme d'arc de cercle, cet arc de cercle étant inscrit dans un plan et **en ce que** le dispositif d'extraction (6) est configuré pour déplacer ledit noyau (32) depuis l'une des deux extrémités de l'alvéole de moulage (40) selon une trajectoire en arc de cercle de même rayon que le rayon (R4) de l'arc de cercle de ce noyau (32).

10. Dispositif selon la revendication 9, **caractérisé en ce que** la surface extérieure du noyau (32) présente une zone longitudinale concave (322), une zone longitudinale opposée convexe (321) et deux zones longitudinales latérales opposées (323, 324), chaque zone longitudinale latérale (323, 324) s'étendant de la zone concave (322) du noyau à la zone convexe (321) du noyau et **en ce que** soit la zone la zone concave (322) du noyau, soit l'une (324) des deux zones longitudinales latérales (323, 324) se prolonge vers l'extérieur et sur au moins une partie de la longueur dudit noyau (32) par ladite pièce intermédiaire (33).

11. Dispositif de moulage selon la revendication 9 ou 10, dans lequel l'évidement du rail de guidage (1) a la forme d'une portion de tore avec une section transversale circulaire, **caractérisé en ce que** ledit noyau (32) a la forme d'un tore de section transversale circulaire et **en ce que** le diamètre (D2) de cette section transversale correspond au diamètre intérieur (D1) de l'évidement (11) du profilé du rail de guidage à mouler.

12. Dispositif de moulage selon l'une quelconque des revendications 8 à 11, **caractérisé en ce que** la partie mâle (31) du moule comprend en outre une pièce de coopération (34) avec ledit dispositif d'extraction (6), ledit noyau (32) se prolongeant vers l'extérieur et sur au moins une partie de sa longueur par ladite pièce intermédiaire (33) de formation de la fente du rail (1), l'épaisseur (E1) de cette pièce intermédiaire (33) correspond à l'épaisseur (E2) du rail de guidage (1) à obtenir.

13. Dispositif de moulage selon la revendication 12, **caractérisé en ce que** ladite pièce de coopération (34) comprend une crémaillère (350), **en ce que** ledit dispositif d'extraction (6) comprend un pignon (60) entraîné en rotation par un dispositif de déplacement, ce pignon (60) engrenant avec les dents (35) de la crémaillère (350), de façon à déplacer cette crémaillère, et conjointement le noyau (32) de la partie mâle du moule, de façon que le noyau (32) sorte de l'alvéole de moulage (40).

14. Dispositif selon les revendications 9 et 13, **caractérisé en ce que** la crémaillère (350) est en forme d'arc de cercle, **en ce que** le pignon (60) est disposé de façon que son axe de rotation (Y-Y') soit parallèle à l'axe central (Y1-Y'1) du cercle du noyau (32) en forme d'arc de cercle de la partie mâle (31) du moule et **en ce que** le pignon (60) engrène avec les dents de la crémaillère (350) de façon à déplacer cette crémaillère et conjointement le noyau (32) selon une trajectoire en forme d'arc de cercle (X1-X'1) de même rayon que le rayon (R4) qui joint l'axe central (Y1-Y'1) du cercle du noyau (32) en forme d'arc de cercle au centre (C1) de la section transversale dudit noyau, de façon à faire sortir le noyau (32) hors de l'alvéole de moulage (40).

15. Procédé de moulage par injection du rail de guidage conforme à l'une des revendications 1 à 7, **caractérisé en ce qu'**il comprend les étapes consistant à :
- injecter au moins une matière plastique sous pression à l'intérieur de la cavité de moulage du moule du dispositif de moulage conforme à l'une des revendications 8 à 14,
- faire durcir cette matière plastique,
- actionner le dispositif d'extraction de façon à faire coulisser la partie mâle du moule hors de la partie femelle dudit moule pour l'en extraire,
- écarter les différentes pièces de la partie femelle du moule pour démouler le rail de guidage obtenu.

## Patentansprüche

1. Führungsschiene (1), insbesondere zur Führung einer Führungskufe, die auf dem Schiebefenster einer Tür eines Kraftfahrzeugs befestigt ist, wobei diese Führungsschiene aus einem Spritzgussmaterial hergestellt ist und mindestens einen Teil umfasst, der die Form eines rohrförmigen Profils (10) hat, der über seine gesamte Länge eine Aussparung (11) aufweist und der auf mindestens einem Teil seiner Länge mit einem Längsschlitz (12) versehen ist, **dadurch gekennzeichnet, dass** dieses rohrförmige Profil (10) kreisbogenförmig gekrümmt ist, wobei dieser Kreisbogen in eine Ebene eingeschrieben ist, so dass die äußere Oberfläche des rohrförmigen Profils (10) eine konkave Längszone (13), eine gegenüberliegende konvexe Längszone (14) und zwei gegenüberliegende seitliche Längszonen (15, 16) aufweist, wobei sich jede seitliche Längszone (15, 16) von der konkaven Zone (13) zu der konvexen Zone (14) erstreckt und dass sich der Längsschlitz (12) entlang einer der beiden seitlichen Längszonen (15, 16) oder entlang der konkaven Längszone (13) erstreckt.

2. Führungsschiene nach Anspruch 1, **dadurch gekennzeichnet, dass** die Aussparung (11) die Form eines Torusabschnitts mit einem kreisförmigen Querschnitt hat.

3. Führungsschiene nach Anspruch 1 oder 2, **dadurch gekennzeichnet, dass** das gekrümmte rohrförmige Profil (10) einen Krümmungsradius (R) zwischen 300 mm und Unendlich aufweist.

4. Führungsschiene nach einem der vorangehenden Ansprüche, **dadurch gekennzeichnet, dass** das rohrförmige Profil (10) mindestens einen Längsflügel (17) umfasst, der sich ab der äußeren Oberfläche dieses rohrförmigen Profils erstreckt und der mit dem rohrförmigen Profil einteilig ist.

5. Führungsschiene nach einem der vorangehenden Ansprüche, **dadurch gekennzeichnet, dass** sie aus mindestens einem Verbundmaterial oder nicht hergestellt ist.

6. Führungsschiene nach Anspruch 5, **dadurch gekennzeichnet, dass** das Material aus Polypropylen (PP), Polyoxymethylen (POM), Acrylnitril-Butadien-Styrol (ABS), Acrylnitril-Butadien-Styrol/Polycarbonat (ABS/PC), Polymethylmethacrylat (PMMA), Acrylnitril-Styrol-Acrylat (ASA) oder Styrol-Acrylnitril ist.

7. Führungsschiene nach einem der vorangehenden Ansprüche, **dadurch gekennzeichnet, dass** es sich um eine Führungsschiene einer Führungskufe handelt, die auf dem Schiebefenster einer Tür eines Kraftfahrzeugs befestigt ist.

8. Spritzformvorrichtung der Führungsschiene nach einem der Ansprüche 1 bis 7, **dadurch gekennzeichnet, dass** sie umfasst:
eine Form (3), die einen männlichen Teil (31) und einen weiblichen Teil (30, 30a, 30b, 30c, 30d, 30e, 30f) umfasst, die gemeinsam einen Formungshohlraum (4) begrenzen, dessen Form derjenigen der Kontur der zu formenden Führungsschiene (1) entspricht, wobei der weibliche Teil mindestens zwei Teile (30, 30a, 30b, 30c, 30d, 30e, 30f) umfasst, wobei der Formungshohlraum (4) einen als Formungswabe bezeichneten Abschnitt (40) umfasst, dessen Form der des mindestens einen Teils der Führungsschiene entspricht, der die Form des rohrförmigen Profils (10) hat, wobei der männliche Teil (31) der Form mindestens einen Kern (32) zur Bildung der Aussparung (11) der Schiene und ein Übergangsteil (33) zur Bildung des Längsschlitzes (12) der Schiene (1) umfasst,
eine Vorrichtung (5) zum Einspritzen unter Druck des Kunststoffs, der zur Herstellung der Führungsschiene (1) bestimmt ist, in das Innere des Formungshohlraums (4), und
eine Extraktionsvorrichtung (6) des Kerns (32) des männlichen Teils aus der Formungswabe (40) der Form, wobei diese Extraktionsvorrichtung (6) dazu ausgelegt ist, den Kern (32) ausgehend von einem der beiden Enden der Formungswabe (40) zu extrahieren.

9. Formungsvorrichtung nach Anspruch 8, **dadurch gekennzeichnet, dass** der Kern (32) kreisbogenförmig gekrümmt ist, wobei dieser Kreisbogen in eine Ebene eingeschrieben ist und dass die Extraktionsvorrichtung (6) dazu ausgelegt ist, den Kern (32) von einem der beiden Enden der Formungswabe (40) auf einem kreisbogenförmigen Weg mit demselben Radius wie der Radius (R4) des Kreisbogens dieses Kerns (32) zu bewegen.

10. Vorrichtung nach Anspruch 9, **dadurch gekennzeichnet, dass** die äußere Oberfläche des Kerns (32) eine konkave Längszone (322), eine gegenüberliegende konvexe Längszone (321) und zwei gegenüberliegende seitliche Längszonen (323, 324) aufweist, wobei sich jede seitliche Längszone (323, 324) von der konkaven Zone (322) des Kerns zur konvexen Zone (321) des Kerns erstreckt und dass sich entweder die konkave Zone (322) des Kerns oder eine (324) der beiden seitlichen Längszonen (323, 324) nach außerhalb und über mindestens einen Teil der Länge des Kerns (32) mittels des Übergangsteils (33) verlängert.

11. Formungsvorrichtung nach Anspruch 9 oder 10, wobei die Aussparung der Führungsschiene (1) die Form eines Torusabschnitts mit einem kreisförmigen Querschnitt hat, **dadurch gekennzeichnet, dass** der Kern (32) die Form eines Torus mit kreisförmigem Querschnitt hat und dass der Durchmesser (D2) dieses Querschnitts dem Innendurchmesser (D1) der Aussparung (11) des Profils der zu formenden Führungsschiene entspricht.

12. Formungsvorrichtung nach einem der Ansprüche 8 bis 11, **dadurch gekennzeichnet, dass** der männliche Teil (31) der Form ferner ein Kooperationsteil (34) mit der Extraktionsvorrichtung (6) umfasst, wobei sich der Kern (32) nach außerhalb und über mindestens einen Teil seiner Länge mittels des Übergangsteils (33) zur Bildung des Schlitzes der Schiene (1) verlängert, wobei die Dicke (E1) dieses Übergangsteils (33) der Dicke (E2) der zu erhaltenden Führungsschiene (1) entspricht.

13. Formungsvorrichtung nach Anspruch 12, **dadurch gekennzeichnet, dass** das Kooperationsteil (34) eine Zahnstange (350) umfasst, dass die Extraktionsvorrichtung (6) ein Ritzel (60) umfasst, das von einer Bewegungsvorrichtung rotatorisch angetrieben wird, wobei dieses Ritzel (60) in die Zähne (35) der Zahnstange (350) eingreift, so dass diese Zahnstange und gemeinsam der Kern (32) des männlichen Teils der Form bewegt werden, so dass der Kern (32) die Formungswabe (40) verlässt.

14. Vorrichtung nach den Ansprüchen 9 und 13, **dadurch gekennzeichnet, dass** die Zahnstange (350) kreisbogenförmig ist, dass das Ritzel (60) derart angeordnet ist, dass seine Drehachse (Y-Y') parallel zur Mittelachse (Y1-Y'1) des Kreises des Kerns (32) in Kreisbogenform des männlichen Teils (31) der Form ist und dass das Ritzel (60) in die Zähne der Zahnstange (350) eingreift, so dass diese Zahnstange und gemeinsam der Kern (32) auf einem kreisbogenförmigen Weg (X1-X'1) mit demselben Radius wie der Radius (R4) bewegt wird, der die Mittelachse (Y1-Y'1) des Kreises des Kerns (32) in Kreisbogenform mit dem Zentrum (C1) des Querschnitts des Kerns verbindet, so dass der Kern (32) aus der Formungswabe (40) entfernt wird.

15. Spritzformverfahren der Führungsschiene nach einem der Ansprüche 1 bis 7, **dadurch gekennzeichnet, dass** es die folgenden Schritte umfasst:
- Einspritzen mindestens eines Kunststoffmaterials unter Druck in das Innere des Formungshohlraums der Form der Formungsvorrichtung nach einem der Ansprüche 8 bis 14,
- Härten dieses Kunststoffmaterials,
- Betätigen der Extraktionsvorrichtung derart, dass der männliche Teil der Form aus dem weiblichen Teil der Form gleitet, um ihn daraus zu entfernen,
- Beabstanden der verschiedenen Teile des weiblichen Teils der Form, um die erhaltene Führungsschiene aus der Form zu lösen.

## Claims

1. Guide rail (1), in particular for guiding a guide shoe fastened to the sliding window of a motor vehicle door, this guide rail being made from an injected plastic material and comprising at least one portion having the shape of a tubular profile (10), which has a recess (11) over its entire length and which is provided over at least one portion of its length with a longitudinal slot (12), **characterised in that** this tubular profile (10) is curved in the shape of an arc of a circle, this arc of a circle being inscribed in a plane, in such a way that the outer surface of said tubular profile (10) has a concave longitudinal zone (13), an opposite convex longitudinal zone (14) and two opposite lateral longitudinal zones (15, 16), with each lateral longitudinal zone (15, 16) extending from the concave zone (13) to the convex zone (14), and **in that** said longitudinal slot (12) extends along one of the two lateral longitudinal zones (15, 16) or along the concave longitudinal zone (13).

2. Guide rail according to claim 1, **characterised in that** the recess (11) has the shape of a portion of a torus with a circular cross-section.

3. Guide rail according to claim 1 or 2, **characterised in that** the curved tubular profile (10) has a radius of curvature (R) comprised between 300 mm and infinity.

4. Guide rail according to one of the preceding claims, **characterised in that** the tubular profile (10) comprises at least one longitudinal wing (17) that extends from the outer surface of this tubular profile and which forms a single piece with said tubular profile.

5. Guide rail according to one of the preceding claims, **characterised in that** it is made from at least one composite material or not.

6. Guide rail according to claim 5, **characterised in that** said material is chosen from polypropylene (PP), polyoxymethylene (POM), acrylonitrile butadiene styrene (ABS), acrylonitrile butadiene styrene/polycarbonate (ABS/PC), poly methyl methacrylate (PMMA), acrylonitrile styrene acrylate (ASA), or styrene acrylonitrile.

7. Guide rail according to one of the preceding claims, **characterised in that** it is a guide rail of a guide shoe fastened to the sliding window of a motor vehicle door.

8. Injection moulding device of the guide rail in accordance with one of claims 1 to 7, **characterised in that** it comprises:
a mould (3) comprising a male portion (31) and a female portion (30, 30a, 30b, 30c, 30d, 30e, 30f) together delimiting a moulding cavity (4) the shape of which corresponds to that of the contour of said guide rail (1) to be moulded, said female portion comprising at least two parts (30, 30a, 30b, 30c, 30d, 30e, 30f), said moulding cavity (4) comprising a portion (40), referred to as "moulding cell", the shape of which corresponds to that of said at least one portion of the guide rail having the shape of said tubular profile (10), the male portion (31) of the mould comprising at least one core (32) for the formation of the recess (11) of the rail and an intermediate part (33) for the formation of said longitudinal slot (12) of the rail (1),
a device (5) for injecting under pressure inside said moulding cavity (4), plastic material intended for manufacturing said guide rail (1), and
a device (6) for extracting the core (32) of said male portion outside the moulding cell (40) of the mould, this extraction device (6) being configured to extract the core (32) from one of the two ends of the moulding cell (40).

9. Moulding device according to claim 8, **characterised in that** the core (32) is curved in the shape of an arc of a circle, this arc of a circle being inscribed in a plane and **in that** the extraction device (6) is configured for displacing said core (32) from one of the two ends of the moulding cell (40) in a trajectory of an arc of a circle of the same radius as the radius (R4) of the arc of a circle of this core (32).

10. Device according to claim 9, **characterised in that** the outer surface of the core (32) has a concave longitudinal zone (322), an opposite convex longitudinal zone (321) and two opposite lateral longitudinal zones (323, 324), with each lateral longitudinal zone (323, 324) extending from the concave zone (322) of the core to the convex zone (321) of the core and **in that** either the concave zone (322) of the core, or one (324) of the two lateral longitudinal zones (323, 324) extends towards the exterior and over at least one portion of the length of said core (32) by said intermediate part (33).

11. Moulding device according to claim 9 or 10, wherein the recess of the guide rail (1) has the shape of a portion of a torus with a circular cross-section, **characterised in that** said core (32) has the shape of a cross-section circular torus and **in that** the diameter (D2) of this cross-section corresponds to the inner diameter (D1) of the recess (11) of the profile of the guide rail to be moulded.

12. Moulding device according to any of claims 8 to 11, **characterised in that** the male portion (31) of the mould further comprises a cooperation part (34) with said extraction device (6), said core (32) extending outwards and over at least one portion of its length by said intermediate part (33) of the formation of the slot of the rail (1), the thickness (E1) of this intermediate part (33) corresponds to the thickness (E2) of the guide rail (1) to be obtained.

13. Moulding device according to claim 12, **characterised in that** said cooperation part (34) comprises a rack (350), **in that** said extraction device (6) comprises a pinion (60) driven in rotation by a displacement device, this pinion (60) meshing with the teeth (35) of the rack (350), in such a way as to displace this rack, and jointly the core (32) of the male portion of the mould, in such a way that the core (32) exits from the moulding cell (40).

14. Device according to claims 9 and 13, **characterised in that** the rack (350) is in the shape of an arc of a circle, **in that** the pinion (60) is disposed in such a way that its axis of rotation (Y-Y') is parallel to the central axis (Y1-Y'1) of the circle of the core (32) in the shape of an arc of a circle of the male portion (31) of the mould and **in that** the pinion (60) meshes with the teeth of the rack (350) in such a way as to displace this rack and jointly the core (32) in a trajectory in the shape of an arc of a circle (X1-X'1) of the same radius as the radius (R4) that joins the central axis (Y1-Y'1) of the circle of the core (32) in the shape of an arc of a circle to the centre (C1) of the cross-section of said core, in such a way as to cause the core (32) to exit outside the moulding cell (40).

15. Method of injection moulding of the guide rail in accordance with one of claims 1 to 7, **characterised in that** it comprises the steps consisting in:
- injecting at least one plastic material under pressure inside the moulding cavity of the mould of the moulding device in accordance with one of claims 8 to 14,
- hardening this plastic material,
- actuating the extraction device in such a way as to slide the male portion of the mould outside the female portion of said mould in order to extract it therefrom,
- separating the different parts of the female portion of the mould in order to unmould the guide rail obtained.
